(19) Europäisches Patentamt
European Patent Office
Office européen des brevets

(11) **EP 3 819 822 A1**

(12) **EUROPEAN PATENT APPLICATION**
published in accordance with Art. 153(4) EPC

(43) Date of publication:
**12.05.2021 Bulletin 2021/19**

(51) Int Cl.:
***G06K 9/62*** *(2006.01)*

(21) Application number: **19886675.8**

(86) International application number:
**PCT/CN2019/115117**

(22) Date of filing: **01.11.2019**

(87) International publication number:
**WO 2020/103676 (28.05.2020 Gazette 2020/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.11.2018 CN 201811410221**

(71) Applicant: **TENCENT TECHNOLOGY (SHENZHEN) COMPANY LIMITED**
**Shenzhen, Guangdong 518057 (CN)**

(72) Inventors:
• **ZHANG, Zijian**
  **Shenzhen, Guangdong 518057 (CN)**
• **SUN, Zhongqian**
  **Shenzhen, Guangdong 518057 (CN)**
• **FU, Xinghui**
  **Shenzhen, Guangdong 518057 (CN)**
• **YANG, Wei**
  **Shenzhen, Guangdong 518057 (CN)**

(74) Representative: **Eisenführ Speiser**
**Patentanwälte Rechtsanwälte PartGmbB**
**Postfach 31 02 60**
**80102 München (DE)**

(54) **IMAGE IDENTIFICATION METHOD AND APPARATUS, SYSTEM, AND STORAGE MEDIUM**

(57)     An image identification method and apparatus, a system, and a storage medium. The method comprises: acquiring a first image (S202); by means of a target model, segmenting the first image into a plurality of first regions, and querying a target region among candidate regions in a first image frame that use a point within a first region as the center, the target region being a candidate region in the first image in which a target object is located, the target model being a pre-trained neural network model that is used to identify from an image a region in which the target object is located, and the target model being obtained by using positive samples that identify a region in which the target object is located and negative samples that identify a region in which noise is located (S204); and identifying a target region in the first image (S206). The present method effectively increases the accuracy in detecting a target object in an image.

Acquire a first image — S202

Segment the first image into multiple first regions by a target model, and search for a target region among candidate regions in the first image each taking a point in the first region as a center, where the target region is a candidate region in the first image in which a target object is located, the target model is a pre-trained neural network model configured to recognize from an image a region in which the target object is located, and the target model is obtained through training by using positive samples with a region in which the target object is located being identified and negative samples with a region in which a noise is located being identified — S204

Identify the target region in the first image — S206

FIG. 2

## Description

This application claims priority to Chinese Patent Application No. 2018114102210, entitled "METHOD, APPARATUS, AND SYSTEM FOR RECOGNIZING ABNORMALITY IN ORGANIC TISSUE OF LIVING BODY THROUGH IMAGE THEREOF" filed with the National Intellectual Property Administration, PRC on November 23, 2018, which is incorporated herein by reference in its entirety.

## FIELD

This application relates to the field of the Internet, and in particular to an image recognition technology.

## BACKGROUND

With the development of science and technology, the exploration of nature is not limited to exploration of surfaces of things, and is intended to explore interiors of things. For example, it is required to detect, for animals or plants in the nature, whether there is an abnormality inside the animals or plants, for example, to detect whether an abnormality or a lesion occurs inside the animals or plants.

Currently, whether there is an abnormality inside the animals or plants is detected manually according to images acquired by photographing the interior of the animals or plants. Due to limited personal experience of professionals, this manner of manually detecting whether there is a target object in an image has a low efficient and low accuracy.

For the foregoing problem, no effective solution has been provided at present.

## SUMMARY

An image recognition method, apparatus, and system and a storage medium are provided according to embodiments of this application, to solve at least the technical problem of a low accuracy of target object detection in the conventional art.

According to one aspect of the embodiments of this application, an image recognition method is provided, which is applied to an electronic device. The method includes: acquiring a first image; segmenting the first image into multiple first regions by using a target model, and searching for a target region among candidate regions in the first image each of which takes a point in one of the first regions as a center, where the target region is a candidate region in the first image in which a target object is located, the target model is a pre-trained neural network model and is configured to recognize from an image a region in which the target object is located, and the target model is obtained through training by using positive samples and negative samples, where each of the positive samples includes an identified region in which the target object is located, and each of the negative samples includes an identified region in which a noise is located; and identifying the target region in the first image.

According to another aspect of the embodiments of this application, an image recognition apparatus is further provided, which includes a first acquisition unit, a search unit, and an identification unit. The first acquisition unit is configured to acquire a first image. The search unit is configured to segment the first image into multiple first regions by using a target model, and search for a target region among candidate regions in the first image each of which takes a point in one of the first regions as a center, where the target region is a candidate region in the first image in which a target object is located, and the target model is a pre-trained neural network model and is configured to recognize from an image a region in which the target object is located. The identification unit is configured to identify the target region in the first image.

According to another aspect of the embodiments of this application, a storage medium is further provided. The storage medium includes a program stored therein, where the program, when run, performs the foregoing method.

According to another aspect of the embodiments of this application, an electronic device is further provided. The electronic device includes a memory, a processor, and a computer program that is stored in the memory and executable on the processor. The processor is configured to perform the foregoing method by using the computer program.

In the embodiments of this application, the first image is segmented into multiple first regions by using the target model, the target region is searched for among the candidate regions in the first image each of which takes a point in the first regions as a center, and the target region is identified in the first image, the target region is a candidate region in the first image in which the target object is located. The target model is acquired through training by using a training image identified by identification information. The training image includes positive samples and negative samples, where each of the positive samples includes an identified region in which the target object is located, and each of the negative samples includes an identified region in which a noise is located. Therefore, with the technical solutions of this application, the target object can be accurately recognized by using the target model, even there is a noise in the first image, thereby avoiding information distortion caused by performing noise filtering on the first image, thus improving accuracy of target object detection.

## BRIEF DESCRIPTION OF THE DRAWINGS

The drawings described herein are used to provide a further understanding of this application, and form a part of this application. Exemplary embodiments of this application and descriptions thereof are used to explain this application, and do not constitute any inappropriate limitation to this application. In the drawings:

FIG. 1 is a schematic diagram of a hardware environment for an image recognition method according to an embodiment of this application.

FIG. 2 is a flowchart of an image recognition method according to an embodiment of this application.

FIG. 3 is a schematic diagram of data clustering according to an embodiment of this application.

FIG. 4 is a schematic diagram of data clustering according to an embodiment of this application.

FIG. 5 is a schematic diagram of an abnormality recognition solution according to an embodiment of this application.

FIG. 6 is a schematic diagram of an abnormality recognition solution according to an embodiment of this application.

FIG. 7 is a schematic diagram of an abnormality recognition model according to an embodiment of this application.

FIG. 8 is a schematic diagram of an abnormality candidate box according to an embodiment of this application.

FIG. 9 is a schematic diagram of an abnormality recognition model according to an embodiment of this application.

FIG. 10 is a schematic diagram of an image recognition apparatus according to an embodiment of this application.

FIG. 11 is a structural block diagram of a terminal according to an embodiment of this application.

## DETAILED DESCRIPTION OF EMBODIMENTS

To make a person skilled in the art better understand solutions of this application, the technical solutions in the embodiments of this application are clearly and completely described below with reference to the drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

It is to be noted that terms such as "first" and "second" in the specification, the claims, and the foregoing drawings of this application are intended to distinguish between similar objects, but are not necessarily used for describing a particular sequence or a chronological order. It is to be understood that the terms shown in such a way are interchangeable in proper circumstances, so that the embodiments of this application described herein can be implemented in orders other than the order illustrated or described herein. Moreover, the terms "include", "comprise" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

According to one aspect of the embodiments of this application, an image recognition method is provided according to an embodiment of this application.

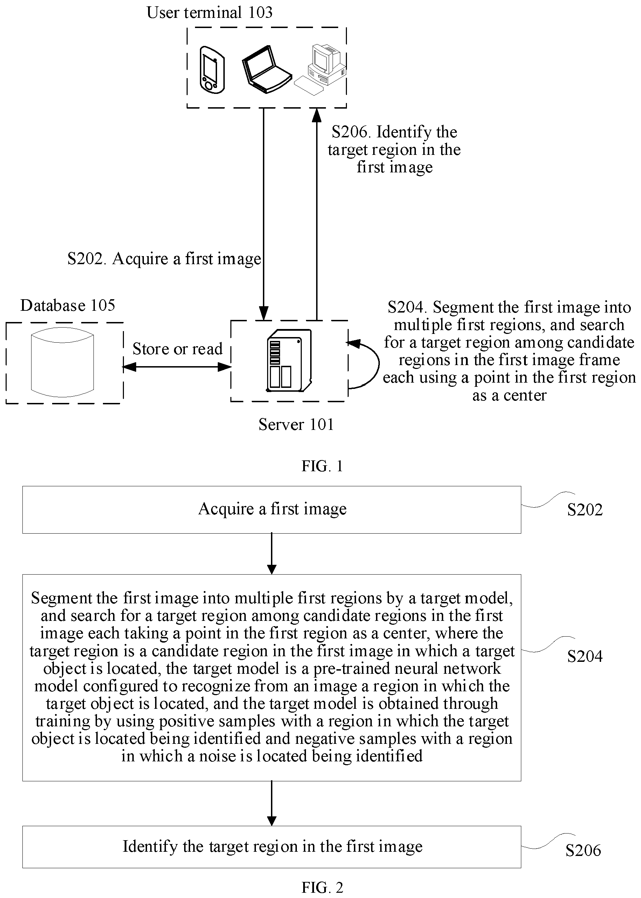

Preferably, in this embodiment, the image recognition method may be applied to a hardware environment as shown in FIG. 1, which includes a server 101 and/or a terminal 103. As shown in FIG. 1, the server 101 is connected to the terminal 103 through a network, and may be configured to provide a service (for example, an application service or an abnormality detection service) for the terminal 103 or a client installed on the terminal 103. A database 105 may be arranged on the server or arranged independently of the server, to provide a data storage service for the server 103. The network includes, but is not limited to, a wide area network, a metropolitan area network, or a local area network. The terminal 103 is not limited to a PC, a mobile phone, a tablet computer, or the like.

The image recognition method in this embodiment of this application may be performed by the terminal 103. The terminal 103 may perform the image recognition method in this embodiment of this application through a client installed on the terminal. FIG. 2 is a flowchart of an image recognition method according to an embodiment of this application. As shown in FIG. 2, the method may include steps S202, S204, and S206.

In step S202, a terminal acquires a first image.

The first image may indicate a single image acquired in a manner of a visible-light camera, an infrared camera, X-rays, CT, perspectivity, or the like. Alternatively, the first image may indicate an image frame in a video stream acquired in the foregoing manner. The first image may be specifically an image acquired by photographing a living body in the foregoing manner. The living body may be, for example, a human, an animal, or a plant.

In step S204, the terminal segments the first image into multiple first regions by using a target model, and searches for a target region among candidate regions in the first image each of which takes a point in one of the first regions as a center. The target region is a region in the first image in which the target object is located, the target model is a pre-trained neural network model which is configured to recognize from an image a region in which the target object is located. The target model is acquired through training by using positive samples and negative samples, where each of the positive samples includes an identified region in which the target object is located, and each of the negative samples includes an identified region in which a noise is located.

The target model may be trained in advance, and may be specifically configured to recognize an abnormal part of organic tissue of a living body. In a case that the target model is used to recognize an abnormal part in organic tissue, it is assumed that an internal feature of an abnormal living object is different from that of a normal living object, thus a "feature set" of a normal living object and/or a "feature set" of an abnormal living object is built. In a case that abnormality detection is performed on interior of a living object of a living body with this target model, a feature of the current living object is compared with the "feature set" of the normal living object and/or the "feature set" of the abnormal living object, if the feature of the current living object disobeys a statistics rule, for example, the feature of the current living object match the "feature set" of the abnormal living object, it is determined that there may be an abnormality inside the living object.

The target model may be a deep neural network model, such as a You Only Look Once (YOLO) neural network model which is a deep learning neural network for target detection. The first image may be segmented into multiple first regions in a regular shape, such as a square or a rectangle. The first image is segmented into the multiple first regions in the regular shape, so as to determine, in each first region, whether there is an abnormal part in a candidate region taking a point in the first region as a center point. The candidate region may be a region in a regular shape, such as a square, a rectangle, a circle, or a rhombus.

Because the training image used for training the target model include negative samples containing noise data caused by the environment, the trained target model is capable of recognizing noises in various scenarios, which can avoid recognizing a scenario noise as a region in which the target object is located, thereby improving the stability, robustness, and reliability of the target model in various scenarios.

In the solution described in step S204, in the case that the target model is used to recognize an abnormal part of organic tissue of a living body, the abnormal part may be a part of a particular abnormality type, or a part of one of multiple abnormality types. The first image is segmented into the multiple first regions by using the target model, and the target region is searched for among the candidate regions in the first image each of which takes a point in one of the first regions as a center. That is, positioning and classification of the abnormal part are performed through one model (that is, the target model), such that positioning and classification are not performed separately, and problems of information distortion and error amplification caused by multiple modules or layers can be solved. In addition, the model has a simple structure, facilitating operation and maintenance. Further, a high processing efficiency can be realized with the single model, ensuring the smoothness of a video frame rate, thus achieving high real-time performance and high availability.

In step S206, the terminal identifies the target region in the first image, so that a user can aware of the region, so as to facilitate the user to determine the target object recognized by the target model.

The terminal may be a medical device for diagnosis, or may be a remote user device for assisting diagnosis, such as a mobile terminal (for example, a mobile phone or a tablet) or a personal computer (PC) used by the user.

Preferably, the target region is identified in the first image in the following way that, if there is only one abnormality type, the target region is framed directly, and if there are multiple abnormality types, in addition to framing target regions, an abnormality type of an abnormal part in each target region and a confidence level of the abnormality type may be further provided.

To frame the target region, it is required to determine coordinates of the target region and acquire information of the abnormality type by using the target model. In other words, it is required to perform positioning and classification simultaneously by using the target model, that is, positioning and classification are performed by using the same model (that is, the target model) in this application.

As described above, the technical solution described in step S202 to step S206 in this application may be applied to abnormality detection of a living object of animals or plants, such as recognition of a tumor inside an animal. In a case that a doctor performs diagnosis, step S202 to step S206 may be performed on a video acquired by scanning an interior of a human body to detect a tumor inside the human body and identify a region in which the tumor is located in an image frame, to facilitate the diagnosis of the doctor. Similarly, an abnormal part inside an animal, a plant, or the like may be detected through the foregoing solution.

The foregoing technical solution is described by taking an example that the image recognition method in this embodiment of this application is performed by the terminal 103. The target model may be integrated in a system of the terminal 103 offline, or installed on the terminal as an application. The terminal may recognize an abnormality offline.

Alternatively, the image recognition method in this embodiment of this application may be performed jointly by the server 101 and the terminal 103. The target model may be arranged on the server 101, and the terminal 103 may call the server through an official account (such as an official account in an instant messaging application), a web page, an application, a mini program, or the like to provide a service by using the target model arranged on the server. For example, the user may follow an official account of the service, and transmit a video stream obtained when accessing the official account to the server 101, to provide an image frame that needs to be processed to the server 101. The server returns a recognition result to the terminal to assist the user in abnormality determination.

Through step S202 to step S206, the first image is segmented into the multiple first regions by using the target model, the target region is searched for among the candidate regions in the first image each of which takes a point in one of the first regions as a center, and the target region is identified in the first image. The target region is a candidate region in the first image in which the target object is located. The target model is acquired through training by using positive samples and negative samples. Each of the positive samples includes an identified region in which the target object is located, and each of the negative samples includes an identified region in which a noise is located being identified. Therefore, with the technical solution of this application, the target object in the first image can be accurately recognized by directly using the target model even in a case of noises, thereby solving the technical problem of a low accuracy of target object detection in the conventional art, thus improving accuracy of the target object detection.

The technical solution of this application is further described in detail in the following with reference to the steps shown in FIG. 2 by using an example that the method provided in this embodiment of this application is used to recognize an abnormal part of organic tissue of a living body.

In the technical solution provided in step S202, a user may download an application for assisting determination to a mobile terminal, and access the application for abnormality detection. The application acquires a video stream through a camera on the mobile terminal, and transmits the video stream to a server. The server acquires a first image frame from the video stream. The first image frame is an image that is acquired by photographing the living body and that includes the organic tissue of the living body.

In the technical solution provided in step S204, the first image frame is segmented into multiple first regions by using a target model, and a target region is searched for among candidate regions in the first image frame each of which takes a point in one of the first regions as a center. The target region is a region in which the abnormal part of the organic tissue of the living body is located among the candidate regions in the first image frame. The target model is a pre-trained neural network model which is configured to recognize from an image frame a region in which the abnormal part of the organic tissue is located.

The target model may be trained in advance or may be trained during usage. A model training solution may include the following step 1 and step 2.

In step 1, a training image that include positive samples each including an identified region in which the abnormal part is located and negative samples each including an identified region in which a noise is located are acquired. The noise is caused when photographing an internal part of the living object.

In step 2, parameters in an original model are trained by using the training image to acquire a recognition model for recognizing the abnormal part. The recognition model includes the target model.

Preferably, parameters in an original model being trained by using the training images to acquire a recognition model for recognizing the abnormal part in step 2 includes the following steps 21 to 26.

In step 21, color data of the training image is inputted into the original model, to train the parameters in the original model by using the color data of the training image.

Preferably, the parameters in the original model may be trained by using the color data of the training image in the following way. Image feature for characterizing the abnormal part are determined by using the color data of the training image. The image feature herein may indicate a color feature, a texture feature, a shape feature, a spatial relationship feature, and the like. Taking the texture feature as an example, if a part with a loose structure inside a mountain is determined as an abnormal part, a texture formed by the loose part inside the mountain when being photographed is a texture learned by the model. For another example, the color of a canceration part inside a human body is usually different from that of surrounding tissues, thus the canceration part can form a distinct texture, and the texture thus formed is a texture learned by the model. Then, values of the parameters in the original model in a case that the image feature is used as an input and a region in the training image in which the abnormal part is located is used as an output in a fully connected layer of the original model are determined. Each layer in the model may be understood as a to-be-initialized function (the number of the function may be one or more). An input of the function is an output of a previous layer (an input of the first layer is color data X). An output Y of a last layer is information for representing the abnormal part. Using multiple training images means providing multiple groups of X and Y, to perform fitting on parameters of the functions, so as to perform the foregoing training.

In this embodiment of this application, the original model includes two neural networks. One neural network is used for abnormality recognition and positioning by using an image feature. The other neural network is used for image feature extraction. The neural network for image feature extraction and the neural network for abnormality recognition and positioning by using the image feature may be trained together or the neural network for abnormality recognition and positioning by using the image feature may be trained independently.

In a training manner, the image feature for characterizing the abnormal part may be determined by using the color data of the training image in the following way. Values of parameters in a convolutional layer of the original model are set to be equal to values of parameters in a convolutional layer of a pre-trained feature extraction model. For example, the feature extraction model is trained by using some open-source projects, such as ImageNet, which is a computer vision system recognition project and at present is a largest database for image recognition in the world. The ImageNet is established for simulating the recognition system of humans and can recognize features such as an object in a picture. The first several layers of the feature extraction model (for example, a YOLO model) may be pre-trained by using the ImageNet dataset, and the original model is then initialized by using parameters of the pre-trained network (such as a YOLO target detection network) with a transfer learning technology. With this training manner, the model acquired through training can have high accuracy, recall rate, and mAP (a kind of evaluation index). Then, the image feature for characterizing the abnormal part is extracted from the color data of the training image through the convolutional layer of the original model.

In an embodiment, in order to train the parameters in the original model by using the color data of the training image, in addition to acquiring weights of layers in the original model through fitting, length and width of the candidate region are further determined in the following manner including steps 211 to 214.

In step 211, multiple region parameters corresponding to multiple positive samples are acquired, each region parameter is used for representing a third region identified by identification information in a positive sample in which the abnormal part is located. The region parameter includes a first parameter for representing a center point of the third region, a second parameter for representing a length of the third region, and a third parameter for representing a width of the third region. The length parameter of the candidate region may be acquired through fitting by using multiple second parameters. The width parameter of the candidate region may be acquired through fitting by using multiple third parameters.

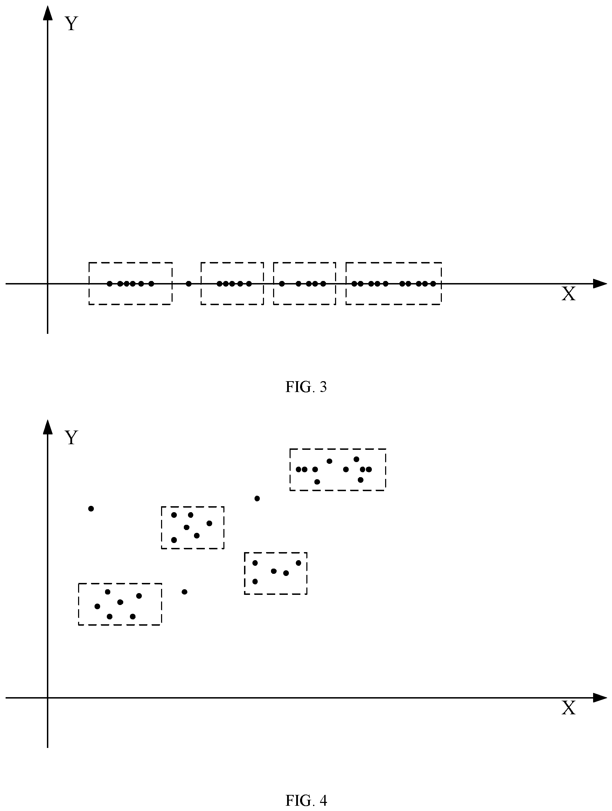

In step 212, to facilitate operation, center points in the multiple region parameters are transformed to the same point (such as the origin point) in a two-dimensional coordinate system. For each region parameter having the transformed center point, the second parameter and the third parameter in the region parameter are transformed in the same way (that is, the distance and direction of movement along the X direction and Y direction are the same as that of the first parameter). After the transformation, multiple second parameters in the multiple region parameters are clustered into multiple first datasets (that is, second parameters close to each other in position are clustered into the same dataset). Referring to FIG. 3, each point on the X-axis corresponds to a second parameter, and each dashed-line box corresponds to a first dataset, and multiple third parameters in the multiple region parameters are clustered into multiple second datasets (that is, third parameters close to each other in position are clustered into the same dataset).

Preferably, the clustering multiple second parameters in the multiple region parameters into multiple first datasets includes processing all the second parameters in the following manner: acquiring a target parameter in the multiple second parameters, where the target parameter is an unprocessed second parameter in the multiple second parameters; building a parameter set that includes the target parameter and a second parameter associated with the target parameter in the multiple second parameters if the target parameter is a core parameter, where the number of second parameters a distance from each of which to the core parameter is within a first threshold is not less than a second threshold, and finding all second parameters that are density reachable from the core parameter, to form a first dataset; and if the target parameter is an edge parameter (a non-core parameter), skipping to search for a next second parameter, until all the second parameters are processed.

If a second parameter a is in an $\varepsilon$-neighborhood of a second parameter b, and b is a core living object, the living object a is directly density reachable from the living object b. Among multiple second parameters b1, b2..., and bn, if b=b1, and a=bn, and bi is directly density reachable from bi-1, b is directly density reachable from the living object a.

It is to be noted that, if a second parameter in a $\varepsilon$-neighborhood (a region with a radius of the parameter $\varepsilon$ is referred to as an $\varepsilon$-neighborhood of the target parameter) of the target parameter is greater than or equal to MinPts (a set parameter that is greater than 1, that is, the second threshold), this parameter is referred to as a core parameter.

Similarly, the third parameters may also be clustered in the foregoing manner.

In step 213, a fourth parameter in each of the multiple first datasets and a fifth parameter in each of the multiple second datasets are acquired. The fourth parameter is used for representing a center of the first dataset, and the fifth parameter is used for representing a center of the second dataset.

In step 214, the fourth parameter is used as a parameter in the original model for representing a length of a region in which the recognized abnormal part is located, and the fifth parameter is used as a parameter in the original model for representing a width of the region in which the recognized abnormal part is located. In other words, a value of a center of each first dataset may be used as a value of the length of the candidate region, and a value of a center of each second dataset may be used as a value of the width of the candidate region. Therefore, the number of combination manners for indicating the size of the candidate region is equal to a product of the number m of the first datasets and the number n of the second datasets.

In another embodiment, in a case that the parameters in the original model are trained by using the color data of the training image, in addition to acquiring weight parameters on layers in the original model through fitting, length and width parameters of the candidate region are further determined in the following manner including steps 215 to 218.

In step 215, multiple region parameters corresponding to multiple positive samples are acquired. Each region parameter is used for representing a third region identified by the identification information in a positive sample in which the abnormal part is located, and the region parameter includes a first parameter for representing a center point of the third region, a second parameter for representing a length of the third region, and a third parameter (such as a value of the X-axis) for representing a width of the third region. The length parameter (such as a value of the Y-axis) of the candidate region may be acquired through fitting by using multiple second parameters. The width parameter of the candidate region may be acquired through fitting by using multiple third parameters.

In step 216, to facilitate operation, center points in the multiple region parameters are transformed to the same point (such as the origin point) in a two-dimensional coordinate system. For each region parameter having the transformed center point, the second parameter and the third parameter in the region parameter are transformed in the same way (that is, the distance and direction of movement along the X direction and Y direction are the same as that of the first parameter). After the transformation, each region parameter may correspond to a to-be-fitted point in the two-dimensional coordinate system. An X-axis coordinate of the to-be-fitted point is a transformed second parameter or a transformed third parameter, and a Y-axis coordinate is a transformed third parameter or a transformed second parameter. Then, all to-be-fitted points may form multiple point sets through fitting.

The fitting manner is similar to the foregoing fitting manner for the second parameters. That is, a first threshold for representing a distance and a second threshold for representing a minimum number of neighboring points are set, and fitting is performed in the foregoing manner. FIG. 4 shows a fitting result, where each dashed-line box represents a point set, and points in the set are to-be-fitted points.

In step 217, a center of each of the multiple point sets is acquired.

In step 218, a larger one of values of an X-axis coordinate and a Y-axis coordinate of a center point in the point set is used as a length (that is, a length of a candidate region) of a region in which the recognized abnormal part is located and a smaller one of values of the X-axis coordinate and the Y-axis coordinate of the center point in the point set is used as a width (that is, a width of the candidate region) of the region in which the recognized abnormal part is located. In other words, values of the center of each point set may be used as values of the length and width of the candidate region. Then, the number of combination manners for representing the size of the candidate region is equal to the number of the point sets.

In step 22, it is determined whether the number of used training images reaches a threshold.

In step 23, if the number of used training images does not reach the threshold, color data of training images is continually inputted to the original model, to train the parameters in the original model by using the color data of the training images.

In step 24, if the number of used training images reaches the threshold, color data of a verification image is used as an input of the trained original model to verify whether the trained original model has a recognition capability.

In step 25, the trained original model is used as the recognition model in a case that the color data of the verification image is used as the input of the trained original model and a second region recognized by the trained original model in the verification image matches an identification region in the verification image. The second region is a region recognized by the trained original model in the verification image in which the abnormal part inside the living object is located, and the identification region is a region identified in the verification image in which the abnormal part inside the living object is actually located.

In step 26, the parameters in the original model are continually trained by using color data of the positive samples and color data of the negative samples in a case that the color data of the verification image is used as the input of the trained original model and a second region recognized by the trained original model in the verification image does not match an identification region in the verification image, until a second region recognized by the trained original model in the verification image matches an identification region in the verification image if the color data of the verification image is used as the input of the trained original model.

In the foregoing embodiment, a resolution of the training image used for training is the same as a resolution of the image frame in the video stream for recognition. The foregoing embodiment is described by taking an example in which the image frame in the video stream has a fixed resolution. In other words, the training images of the same resolution are used for training. To improve the adaptability of the technical solution of this application to images of different resolutions, in a case that the parameters in the original model are trained by using the training image to acquire a recognition model for abnormal part recognition, parameters in original models may be trained by using training images of multiple resolutions to acquire multiple recognition models corresponding to the multiple resolutions. Each recognition model is acquired through training by using training images of the same resolution, and any two recognition models are acquired through training by respectively using training images of different resolutions. In other words, each model is configured to recognize image frames of one resolution (that is, a resolution of training images used for training).

After training is performed in the foregoing manner, during a process of performing step S204, in order to segment the first image into multiple first regions by using a target model, a target model corresponding to a resolution of the first image (for example, a resolution of the target model is the same as that of the first image, or the resolution of the target model is closest to that of the first image) is selected from the multiple recognition models, and the first image is segmented into multiple first regions by using the target model. In order to search for the target region among the candidate regions in the first image each of which takes a point in the first region as a center, multiple fourth regions found by the target model in all the candidate regions are acquired, where the fourth region is a region recognized by the target model in the first image in which the abnormal part of the organic tissue of the living body is located.

Because abnormal parts may have confusing abnormality types, for one region whose type is difficult to distinguish, several different fourth regions may be identified by using the target model. To improve actual user experience of a user, in a case that there are fourth regions a distance between centers of which is not greater than a third threshold (a preset threshold) among the multiple fourth regions, a region with a highest confidence level in the fourth regions a distance between centers of which is not greater than a third threshold is used as a target region. That is, the following fourth region is used as a target region, this fourth region has the highest confidence level (the confidence level is a parameter representing credibility, which is outputted by the model) among neighboring, partially overlapped or superposed fourth regions, and a fourth region a distance from the center of which to a center of any other fourth region is more than the third threshold is used as the target region.

In the technical solution provided in step S206, the target region is identified in the first image, and an abnormality type of the abnormal part in the target region and a confidence level of the abnormality type are identified, so that the user can aware of the region, so as to facilitate the user to determine the abnormal part recognized by the target model.

In an embodiment, description is made by taking an example that the technical solution of this application is applied to abnormality detection for a malignant tumor. Abnormality detection for mountains, rivers, plants, and other living objects is similar thereto, which is not repeated herein.

Currently, according to statistics by various organizations, the colon cancer ranks top 5 in incidence and mortality rate among malignant tumors of high incidence in China. However, on one hand, with the growth of the population in China and the increasingly severe aging problem, load of the health care system in China becomes heavier, and a miss or an error easily occurs during diagnosis when doctors face large numbers of medical images generated constantly. On the other hand, due to unbalanced region development, medical resources are distributed extremely unbalanced in China, where high-level doctors are gathered in large grade A tertiary hospitals in big cities, while levels of hospitals in other regions are uneven, thus patients may be diagnosed and treated incorrectly.

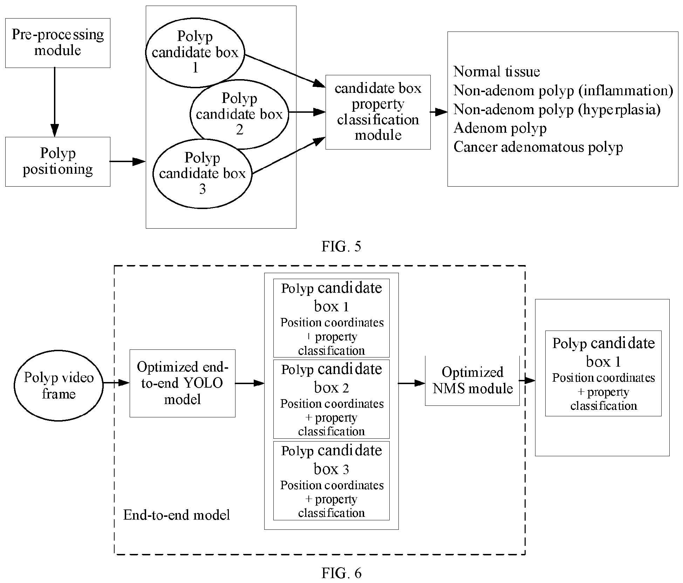

To resolve the foregoing problem, in an embodiment, as shown in FIG. 5, an image may be pre-processed by a pre-processing module such as a white light narrow band imaging (NBI) module. An image-aided diagnosis system detects a position of a polyp, that is, a polyp candidate box, with a sliding window solution. Then, the property of the polyp is determined through a classification method of a candidate box property classification module (for example, a support vector machine (SVM)). In a case that a deep convolutional neural network (CNN) is used, the polyp property classification module is substantially substituted by the CNN, and positioning in a natural image may be performed by a candidate region generation solution such as a selective search algorithm and a region proposal network.

The foregoing technical solution (a solution in which positioning and classification of abnormal part are performed separately) mainly has the following disadvantages. First, the positioning is performed separately from the classification. However, the effect of the classification depends much on a result of polyp positioning, the separately performed operations results in that features of the entire image cannot be acquired for the classification. Second, multiple layers and modules are used, which may gradually increase an error layer by layer and result in information distortion. In this technical solution, the polyp detection process is usually segmented and assigned to several sub-modules, and negative impacts such as information distortion and error amplification exist between the sub-modules and become severer with the increase of modules and layers. Third, processing efficiency is low and real-time performance is poor. This technical solution can not meet the real-time requirement, especially serial transmission between multiple modules significantly prolongs the processing time. Fourth, the model is complex. This technical solution is complex, which may increase the tracing difficulty, making it inconvenience in daily use, maintenance, and evaluation. Fifth, the production environment and robustness are poor. In this technical solution, many irrelevant or low-quality noise data occurring in actual scenarios are mostly artificially ignored, resulting in high rates of misjudgment and false positive or even failure in actual application in hospitals.

In another embodiment of this application, an end-to-end positioning and property determining method for colon polyp is provided. The method is performed by using an end-to-end network, and thus has the following advantages. First, positioning and classification are not performed separately in different phases, the positioning and the classification are performed by sharing the same network. Second, a single network model is used, which solves the problem of information distortion and error amplification caused by multiple modules or layers. The model is simpler, facilitating operation and maintenance. Third, high real-time performance and high availability are achieved. The single model has a higher processing efficiency, ensuring the smoothness of a video frame rate. In addition, the optimization in the following two aspects is provided: 1) anchor box optimization, which is an anchor box parameter initialization method based on DBSCAN (instead of K-means); and 2) an adaptive multi-scale prediction network, which is configured to select, based on features of an image, a suitable preload model for prediction.

With the end-to-end positioning and property determining method for colon polyp provided in this application, in a case that a doctor detects a polyp by using an endoscope, a position of the polyp can be found and positioned in real time by merely transmitting a video stream to the above end-to-end network, and the property of the polyp may be acquired simultaneously (optional). The technology and method in this application can provide the following functions and benefits: 1) assisting a doctor in detecting and positioning a polyp to avoid a miss during diagnosis; and 2) assisting the doctor in determining the property of the polyp to improve the determining accuracy.

It can be learned from the foregoing analysis that compared with other solutions, with the technology and method in this application, it can effectively assist a doctor in diagnosis by using a simple, high real-time, and high-available model (involving less modules) while ensuring a good detection effect. In addition, the technology and method in this application can achieve a better effect and performance through some optimization operations, thus making it an end-to-end colon detection solution (including positioning, or positioning and property determining) that can be directly applied to a hospital production environment.

The technical solution of this application is described in detail in the following. A main object of this application is to assist a doctor in detecting and positioning a polyp by using a simple, high real-time, and high-available model, and acquire the property and type of the polyp.

An overall architecture, that is, an end-to-end target model, of the technical solution of this application is as shown in FIG. 6. In a case that property classification includes a single classification, the solution is used as a polyp positioning solution. In a case that the property classification includes multiple classifications (for example, three classifications: non-adenoma, adenoma, and adenocarcinoma), with the end-to-end solution, position coordinates can be predicted and the type of the polyp can be finely classified.

To meet the requirement for high availability and high real-time performance, the module performs detection and positioning on the polyp by using an optimized YOLO end-to-end model. With the YOLO model, the target detection may be achieved by determining coordinates and regression of category probability of a candidate region (bounding boxes). Compared with algorithms such as Faster R-CNN, YOLO model indicates a one-stage target detection algorithm, with which both position coordinates and category probabilities of the box can be acquired by using a forward network once. Therefore, in a case of ensuring the detection accuracy, YOLO model has far higher prediction performance and efficiency than other two-stage target detection algorithms. In addition, an optimized non-maximum suppression module is used to perform non-maximum suppression optimization, such that the frame rate can exceed 40 fps, which can meet the requirement for high real-time performance in an actual hospital production environment.

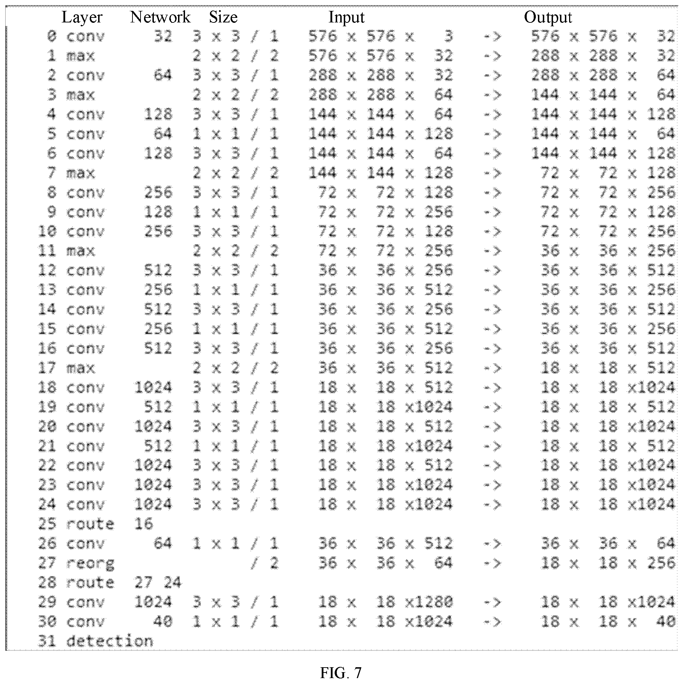

In the technical solution of this application, a structure of the used network is as shown in FIG. 7, which includes 32 layers, such as a convolutional layer conv, a pooling layer max, a fully connected layer detection. Based on the network model of this application, the following several optimization methods are provided in this application.

A training optimization method is a parameter initialization method based on DBSCAN for anchor boxes.

In the conventional art, anchor boxes are acquired through clustering by using the K-means algorithm. However, in this application, anchor boxes can be acquired through the DBSCAN algorithm. Compared with the DBSCAN algorithm, the K-means algorithm has the following disadvantages: 1) the K-means algorithm needs to determine the number of clusters, while the DBSCAN algorithm automatically determine the number of clusters only by parameters of a second threshold minPts and a first threshold eps; 2) the K-means algorithm is susceptible to noise points, while the DBSCAN algorithm can recognize noise points and can be immune to noises, as shown in FIG. 3 and FIG. 4; 3) the K-means algorithm is largely affected by a selected initial point and a shape of a cluster, while DBSCAN algorithm is not bothered by such problems and has higher adaptability; and 4) the DBSCAN algorithm is a density-based clustering algorithm and thus distances between points need to be calculated (neighborhood operation), therefore, in a case of polyp positioning, the neighborhood operation may be achieved by calculating an intersection over union (IOU) (a metric for characterizing accuracy of detection of an object in a particular dataset) between polyp boxes. Therefore, the above operation may be performed by using the following distance metric formula:

$$d(box, centroid) = 1 - IOU(box, centroid)$$

where the parameters minPts and eps of the DBSCAN algorithm may be acquired manually or through a neighborhood algorithm k-Nearest Neighbor (kNN), box represents a candidate region, centroid represents a center point, and IOU () represents calculating an IOU.

The DBSCAN-based method for anchor boxes provided in this application may also be applied to other deep learning algorithms (for example, Faster R-CNN) using anchor boxes. For some polyp datasets, especially when a box size is not identified well, the parameter initialization method may have a good performance.

Another training optimization method includes pre-training and multi-scale training.

ImageNet represents a computer vision system recognition project, which is at present a largest database for image recognition in the world and is established for simulating the recognition system of humans. The ImageNet can recognize an object from a picture. The first few layers of the YOLO model are pre-trained by using the ImageNet dataset,, and by using a transfer learning technology, the YOLO target detection network is initialized by using network parameters acquired by pre-training, such that the finally acquired model can have a higher accuracy, recall rate, and mAP.

A multi-scale training range of the YOLO model is [320, 608]. With reference to actual features of data of a colon polyp endoscope, the multi-scale training range may be slightly adjusted to [320, 800] to enable the model to have better adaptability to an actual medical device.

By initializing the parameters of the target detection network by using the model trained by a dataset including a large number of high-quality identifiers, such as ImageNet, and in combination with the multi-scale training technology, the model can jump over the trap of a local optimal solution, and converge on a global optimal solution.

Another training optimization method is robustness training.

In the conventional art, a pre-processing module is arranged before a polyp detecting and positioning module to filter out noises.

However, the arranging the pre-processing module increases the numbers of sub-layers and sub-modules, there may be problems of error transmission and amplification. In the technical solution of this application, noise data (including overexposure, flare noise, random noise, and the like) is directly added to the training set like a normal polyp image and is used as negative samples for end-to-end training, thereby reducing layers to avoid the problems of error transmission and amplification, thus achieving desired actual operation effect.

A service optimization method is performed by using the NMS algorithm.

There are S*S bounding boxes outputted by the YOLO model, such that an NMS algorithm module is required to perform deduplication and combination on the bounding boxes.

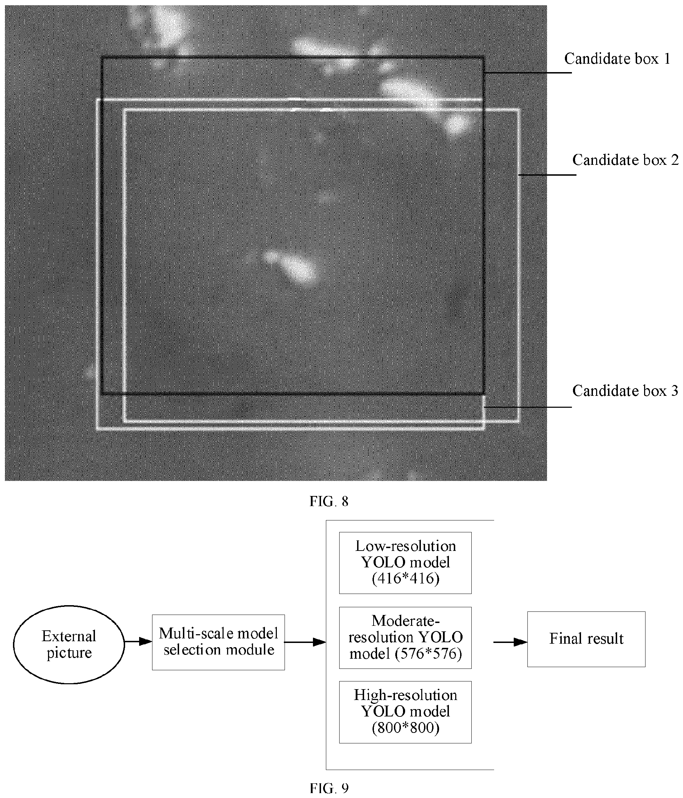

With the original NMS algorithm, sorting, deduplication, and combination are performed within each classification, and deduplication and combination are not performed accross different classifications. Because finely classified types of the polyp dataset are quite confusing, for a polyp region whose type is difficult to distinguish, several different polyp boxes are generally generated with the model. FIG. 8 shows an example in which there are multiple candidate boxes around a region. To improve actual user experience of a doctor, the following NMS optimization algorithm is provided in this application.

A similarity condition may be defined as follows: IOU is greater than a threshold or a center point falls within a region. Based on the foregoing algorithm, only a result with a high confidence level is outputted, thereby improving actual use experience of a doctor.

Another service optimization method is performed by using multi-scale model selection module.

In a cloud service, in the conventional art, input images of different sizes are usually inputted into an input layer of a neural network of a fixed size. The applicant finds in practice that a high degree of proximity of the size of the input layer of a network to the input of the original picture indicates a high accuracy and recall rate. Therefore, in this application, a multi-scale model selection module is provided, with which no transmission error and error amplification occurs, and the end-to-end detection speed is not affected, as shown in FIG. 9.

The model is deployed according to bearing capacity of a server, and needs to be loaded in a video memory. Otherwise, the real-time performance may be affected.

In this application, a complete set of technical solutions for end-to-end positioning and property determining of a colon polyp are provided, which may be applied to hospitals, that is, a novel anchor box parameter initialization method based on DBSCAN (instead of K-means) (an algorithm solution), a cross-classification NMS algorithm module (an algorithm solution) applied to a colon polyp, and a multi-scale preload prediction network (a service mode) based on picture size adaptive selection. The provided novel anchor box parameter initialization method based on DBSCAN (instead of K-means) can assist initial parameter configuration of the YOLO model. The provided end-to-end cross-classification NMS algorithm module applied to a colon polyp improves user experience. According to the provided multi-scale prediction network, a proper network is selected according to a picture size, to improve the final effect.

With the end-to-end positioning and property determining method for a colon polyp provided in this application, by way of advantages of an end-to-end network, problems of information distortion and error amplification caused by multiple modules or layers are solved, facilitating operation and maintenance. High real-time performance is achieved and the model has a high processing efficiency, thus ensuring the smoothness of a video frame rate (>40 fps). The model has robustness and anti-noise capacity, and can be applied to actual production environments of hospitals.

Based on the above, a set of end-to-end colon detection technical solutions that can be directly applied to a hospital production environment are provided in this application, which, in a current situation where medical resources are scarce and are distributed unbalanced, can assist a doctor in detecting and positioning a polyp to avoid a miss during diagnosis; and assist the doctor in determining the property of the polyp to improve the determining accuracy.

It is to be noted that, in the foregoing method embodiments, to make the description simple, the method is described as a series of operations. However, a person skilled in the art needs to know that this application is not limited to the described sequence of the operations, this is because according to this application, some steps may be performed in another sequence or may be simultaneously performed. In addition, a person skilled in the art shall also be aware that all the embodiments described in the specification are preferred embodiments, and the related operations and modules are not necessarily mandatory to this application.

According to the description of the foregoing embodiments, a person skilled in the art may clearly learn that the method according to the foregoing embodiments may be implemented by using software and a necessary general hardware platform, or certainly may be implemented by using hardware. However, in most cases, the former is a better implementation. Based on such an understanding, the technical solutions in this application essentially or the part contributing to the conventional technologies may be implemented in the form of a software product. The computer software product is stored in a storage medium (for example, a read-only memory (ROM)/random access memory (RAM), a magnetic disk or an optical disc), and includes several instructions for instructing a terminal device (which may be a mobile phone, a computer, a server, a network device or the like) to perform the method described in the embodiments of this application.

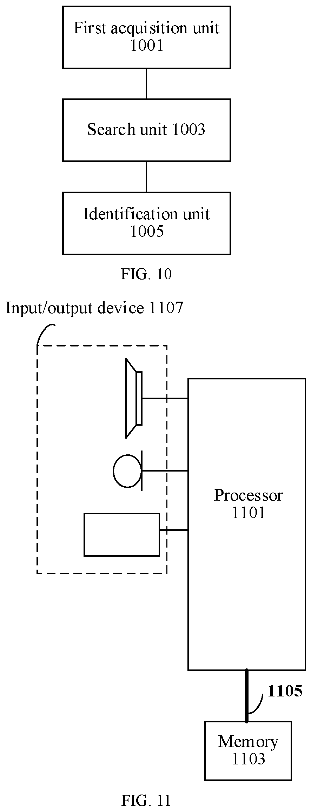

According to another aspect of the embodiments of this application, an abnormality recognition apparatus for an image of organic tissue of a living object is provided, which is configured to perform the abnormality recognition method for an image of organic tissue of a living object. FIG. 10 is a schematic diagram of an abnormality recognition apparatus for an image of organic tissue of a living object according to an embodiment of this application. As shown in FIG. 10, the apparatus may include: a first acquisition unit 1001, a search unit 1003, and an identification unit 1005.

The first acquisition unit 1001 is configured to acquire a first image.

The search unit 1003 is configured to segment the first image into multiple first regions by using a target model, and search for a target region among candidate regions in the first image each of which takes a point in one of the first regions as a center. The target region is a candidate region in the first image in which a target object is located, the target model is a pre-trained neural network model which is configured to recognize from an image a region in which the target object is located, and the target model is acquired through training by using positive samples each including an identified region in which the target object is located and negative samples each including an identified region in which a noise is located.

The identification unit 1005 is configured to identify the target region in the first image.

The first acquisition unit 1001 in this embodiment may be configured to perform step S202 in the embodiments of this application, the search unit 1003 in this embodiment may be configured to perform step S204 in the embodiments of this application, and the identification unit 1005 in this embodiment may be configured to perform step S206 in the embodiments of this application.

It is to be noted that the foregoing modules and corresponding steps may be used to implement the same example and may have the same application scenario, which are not limited to the content disclosed in the foregoing embodiments. The modules may be run in the hardware environment shown in FIG. 1 as a part of the apparatus, and may be implemented through software, or may be implemented through hardware.

With the forgoing modules, the first image is segmented into the multiple first regions by using the target model, the target region is searched for among the candidate regions in the first image each of which takes a point in one of the first regions as a center, and the target region is identified in the first image. The target region is a candidate region in the first image in which the target object is located. The target model is acquired through training by using the positive samples each including an identified region in which the target object is located and the negative samples each including an identified region in which a noise is located. Therefore, in the technical solution of this application, the target object in the first image can be accurately recognized by directly using the target model, even there is a noise, thereby solving the technical problem of a low accuracy of target object detection in the conventional art, thus improving the accuracy of target object detection.

Preferably, the apparatus in this application may further include: a second acquisition unit and a training unit.

The second acquisition unit is configured to acquire a training image that includes the positive samples each including an identified region in which the target object is located and the negative samples each including an identified region in which a noise is located, before the first image is segmented into the multiple first regions by using the target model and the target region is searched for among the candidate regions in the first image each of which takes a point in one of the first regions as a center.

The training unit is configured to train parameters in an original model by using the training image to acquire a recognition model configured to recognize the target object, the recognition model includes the target model.

Preferably, the training unit may include: a training module, a first validation model, and a second validation model.

The training module is configured to input color data of the training image into the original model, and train the parameters in the original model by using the color data of the training image.

The first validation model is configured to use the trained original model as the recognition model in a case that color data of a verification image is used as an input of the trained original model and a second region recognized by the trained original model in the verification image matches an identification region in the verification image. The second region is a region recognized by the trained original model in the verification image in which the target object is located, and the identification region is a region identified in the verification image in which the target object is actually located.

The second validation model is configured to instruct the training module to continually train the parameters in the original model by using color data of the positive samples and color data of the negative samples in a case that the color data of the verification image is used as the input of the trained original model and the second region recognized by the trained original model in the verification image does not match the identification region in the verification image, until the second region recognized by the trained original model in the verification image matches the identification region if the color data of the verification image is used as the input of the trained original model.

Preferably, the training module may be further configured to determine an image feature for characterizing the target object by using the color data of the training image; and determine values of the parameters in the original model in a case that the image feature is used as an input and a region in the training image in which the target object is located is used as an output in a fully connected layer of the original model.

Preferably, the training module may be further configured to: acquire multiple region parameters corresponding to the positive samples, where each of the region parameters is used for characterizing a third region identified by identification information in a positive sample in which the target object is located, the region parameter includes a first parameter for representing a center point of the third region, a second parameter for representing a length of the third region, and a third parameter for representing a width of the third region; cluster multiple second parameters in the multiple region parameters into multiple first datasets, and cluster multiple third parameters in the multiple region parameters into multiple second datasets; acquire a fourth parameter in each of the multiple first datasets and a fifth parameter in each of the multiple second datasets, where the fourth parameter is used for representing a center of the first dataset, and the fifth parameter is used for representing a center of the second dataset; and use the fourth parameter as a parameter in the original model for representing a length of a region in which the recognized target object is located, and use the fifth parameter as a parameter in the original model for representing a width of the region in which the recognized target object is located.

Preferably, in order to cluster multiple second parameters in the multiple region parameters into multiple first datasets, the training module may be further configured to: acquire a target parameter in the multiple second parameters, where the target parameter is an unprocessed second parameter in the multiple second parameters; and in a case that the target parameter is a core parameter, build a parameter set that includes the target parameter and a second parameter associated with the target parameter in the multiple second parameters, where the number of second parameters a distance from each of which to the core parameter is within a first threshold is not less than a second threshold.

Preferably, in order to determine the image feature for characterizing the target object by using the color data of the training image, the training module may be further configured to: set a parameter in a convolutional layer of the original model to have a same value as a parameter in a convolutional layer of a pre-trained feature extraction model; and extract the image feature for characterizing the target object from the color data of the training image through the convolutional layer of the original model.

Preferably, the training unit may be further configured to train the parameters in the original model by using the training images of multiple resolutions to acquire multiple recognition models corresponding to the multiple resolutions, where each of the recognition models is acquired through training by using a training image of one resolution, and training images for acquiring any two of the recognition models have different resolutions.

Preferably, the search unit may be further configured to: acquire multiple fourth regions found by the target model among all the candidate regions, where each of the fourth regions is a region recognized by the target model in the first image in which the target object is located; and in a case that there are fourth regions a distance between centers of which is not greater than a third threshold among the multiple fourth regions, use a fourth region with a highest confidence level among the fourth regions a distance between centers of which is not greater than a third threshold as a target region, and use a fourth region a distance from a center of which to a center of any other one of the fourth regions is greater than the third threshold as a target region.

Preferably, the search unit may be further configured to select the target model corresponding to a resolution of the first image from multiple recognition models, and segment the first image into the multiple first regions by using the target model.

It is to be noted that the foregoing modules and corresponding steps may be used to implement the same example and may have the same application scenario, which are not limited to the content disclosed in the foregoing embodiments. It is to be noted that the modules may be run in the hardware environment shown in FIG. 1 as a part of the apparatus, and may be implemented through software, or may be implemented through hardware.. The hardware environment includes a network environment.

According to another aspect of the embodiments of this application, a server or a terminal configured to perform the image recognition method is further provided.

FIG. 11 is a structural block diagram of a terminal according to an embodiment of this application. As shown in FIG. 11, the terminal may include: one or more processors 1101 (FIG. 11 shows only one processor), a memory 1103, and a transmission device 1105. As shown in FIG. 11, the terminal may further include an input/output device 1107.

The memory 1103 may be configured to store a software program and a module, for example, a program instruction/module corresponding to the image recognition method and apparatus in the embodiments of this application, and the processor 1101 performs various functional applications and data processing by running a software program and a module stored in the memory 1103, that is, performing the foregoing image recognition method. The memory 1103 may include a high-speed random access memory, and may further include a non-volatile memory such as one or more magnetic storage devices, flash memories, or other non-volatile solid-state memories. In some examples, the memory 1103 may further include memories remotely arranged relative to the processor 1101, and these remote memories may be connected to a terminal through a network. Examples of the network include but are not limited to, the Internet, an intranet, a local area network, a mobile communication network, and a combination thereof.

The transmission device 1105 is configured to receive or send data via a network, or may further be configured to transmit data between the processor and the memory. A specific example of the foregoing network may include a wired network and a wireless network. In an example, the transmission device 1105 includes a network interface controller (NIC), and the NIC may be connected to another network device and a router via a network cable, to communicate with the Internet or a local area network. In an example, the transmission device 1105 is a radio frequency (RF) module, configured to communicate with the Internet in a wireless manner.

Specifically, the memory 1103 is configured to store an application program.

The processor 1101 may invoke, by using the transmission device 1105, the application program stored in the memory 1103, to perform the following steps of:

acquiring a first image;

segmenting the first image into multiple first regions by using a target model, and searching for a target region among candidate regions in the first image each of which takes a point in one of the first regions as a center, where the target region is a candidate region in the first image frame in which a target object is located, the target model is a pre-trained neural network model and is configured to recognize from an image a region in which the target object is located, and the target model is acquired through training by using positive samples and negative samples, where each of the positive samples includes an identified region in which the target object is located, and each of the negative samples includes an identified region in which a noise is located; and

identifying the target region in the first image.

Preferably, for a specific example in this embodiment, reference may be made to the example described in the foregoing embodiment, and details are not described herein again in this embodiment.

A person of ordinary skill in the art may understand that the structure shown in FIG. 11 is merely an example, and the terminal may be a terminal device such as a smartphone (for example, an Android mobile phone or an iOS mobile phone), a tablet computer, a palmtop computer, a mobile Internet device (MID), or a PAD. FIG. 11 does not limit the structure of the electronic device. For example, the terminal may further include more or fewer components (for example, a network interface and a display device) than those shown in FIG. 11, or have a configuration different from that shown in FIG. 11.

A person of ordinary skill in the art may understand that all or some of the steps of the methods in the foregoing embodiments may be implemented by a program instructing relevant hardware of the terminal device. The program may be stored in a computer-readable storage medium. The storage medium may include a flash disk, a ROM, a RAM, a magnetic disk, an optical disc, and the like.

A storage medium is further provided according to an embodiment of this application. Preferably, in this embodiment, the storage medium may be configured to store program code for performing the image recognition method.

Preferably, in this embodiment, the storage medium may be arranged in at least one of multiple network devices in networks shown in the foregoing embodiments.

Preferably, in this embodiment, the storage medium is configured to store program code for performing the following steps of:

acquiring a first image; and

segmenting the first image into multiple first regions by using a target model, and searching for a target region among candidate regions in the first image each of which takes a point in one of the first regions as a center, where the target region is a candidate region in the first image frame in which a target object is located, the target model is a pre-trained neural network model and is configured to recognize from an image a region in which the target object is located, and the target model is acquired through training by using positive samples and negative samples, where each of the positive samples includes an identified region in which the target object is located, and each of the negative samples includes an identified region in which a noise is located; and

identifying the target region in the first image.

Preferably, for a specific example in this embodiment, reference may be made to the example described in the foregoing embodiment, and details are not described herein again in this embodiment.

Preferably, in this embodiment, the storage medium may include, but is not limited to, various media such as a USB flash drive, a ROM, a RAM, a removable hard disk, a magnetic disk, and an optical disc that can store the program code.

The sequence numbers of the foregoing embodiments of this application are merely for description purpose and do not indicate the preference of the embodiments.

When the integrated unit in the foregoing embodiments is implemented in the form of a software functional unit and sold or used as an independent product, the integrated unit may be stored in the foregoing computer-readable storage medium. Based on such an understanding, the technical solutions of this application essentially, or a part contributing to the related art, or all or a part of the technical solution may be implemented in a form of a software product. The computer software product is stored in a storage medium and includes several instructions for instructing one or more computer devices (which may be a PC, a server, a network device or the like) to perform all or some of steps of the methods in the embodiments of this application.

In the foregoing embodiments of this application, descriptions of the embodiments have different emphases. As for parts that are not described in detail in one embodiment, reference can be made to the relevant descriptions of the other embodiments.

In the several embodiments provided in this application, it is to be understood that the disclosed client can be implemented in other manners. The described apparatus embodiment is merely an example. For example, the units are divided merely in logical functions, and may be divided in another way in an actual implementation. For example, multiple units or components may be combined or integrated into another system, or some features may be ignored or not performed. In addition, the coupling, or direct coupling, or communication connection between the displayed or discussed components may be the indirect coupling or communication connection by means of some interfaces, units, or modules, and may be in electrical or other forms.

The units described as separate parts may or may not be physically separated, and the parts displayed as units may or may not be physical units. That is, the units may be located in one place, or may be distributed on multiple network units. Some or all of the units may be selected according to actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in the form of hardware, or may be implemented in the form of a software function unit.

The foregoing descriptions are merely exemplary implementations of this application. A person of ordinary skill in the art may make several improvements and modifications without departing from the principle of this application, and the improvements and modifications shall fall within the protection scope of this application.

## Claims

1. An image recognition method, applied to an electronic device, the method comprising:

   acquiring a first image;
   segmenting the first image into a plurality of first regions by using a target model, and searching for a target region among candidate regions in the first image each of which takes a point in one of the first regions as a center, wherein the target region is a candidate region in the first image in which a target object is located, the target model is a pre-trained neural network model and is configured to recognize from an image a region in which the target object is located, and the target model is obtained through training by using positive samples and negative samples, wherein each of the positive samples comprises an identified region in which the target object is located, and each of the negative samples comprises an identified region in which a noise is located; and
   identifying the target region in the first image.

2. The method according to claim 1, wherein before the segmenting the first image into a plurality of first regions by using a target model, and searching for a target region among candidate regions in the first image each of which takes a point in one of the first regions as a center, the method further comprises:

acquiring a training image that comprises the positive samples and negative samples, wherein each of the positive samples comprises the identified region in which the target object is located, and each of the negative samples comprises the identified region in which a noise is located; and

training parameters in an original model by using the training image to acquire a recognition model configured to recognize the target object, the recognition model comprising the target model.

3. The method according to claim 2, wherein the training parameters in an original model by using the training image to acquire a recognition model configured to recognize the target object comprises:

inputting color data of the training image into the original model, and training the parameters in the original model by using the color data of the training image;

in a case that color data of a verification image is used as an input of the trained original model and a second region recognized by the trained original model in the verification image matches an identification region in the verification image, using the trained original model as the recognition model, wherein the second region is a region recognized by the trained original model in the verification image in which the target object is located, and the identification region is a region identified in the training image in which the target object is actually located; and

in a case that the color data of the verification image is used as the input of the trained original model and the second region recognized by the trained original model in the verification image does not match the identification region in the verification image, continually training the parameters in the original model by using color data of the positive samples and color data of the negative samples, until the second region recognized by the trained original model in the verification image matches the identification region if the color data of the verification image is used as the input of the trained original model.

4. The method according to claim 3, wherein the training the parameters in the original model by using the color data of the training image comprises:

determining an image feature for characterizing the target object by using the color data of the training image; and

determining values of the parameters in the original model in a case that the image feature is used as an input and a region in the training image in which the target object is located is used as an output for a fully connected layer of the original model.

5. The method according to claim 3, wherein the training the parameters in the original model by using the color data of the training image comprises:

acquiring a plurality of region parameters corresponding to the positive samples, wherein each of the region parameters is used for characterizing a third region identified in a corresponding one of the positive samples in which the target object is located, the region parameter comprises a first parameter for representing a center point of the third region, a second parameter for representing a length of the third region, and a third parameter for representing a width of the third region;

clustering a plurality of second parameters in the plurality of region parameters into a plurality of first datasets, and clustering a plurality of third parameters in the plurality of region parameters into a plurality of second datasets;

acquiring a fourth parameter in each of the plurality of first datasets and a fifth parameter in each of the plurality of second datasets, wherein the fourth parameter is used for representing a center of the first dataset, and the fifth parameter is used for representing a center of the second dataset; and

using the fourth parameter as a parameter in the original model for representing a length of a region in which the recognized target object is located, and using the fifth parameter as a parameter in the original model for representing a width of the region in which the recognized target object is located.

6. The method according to claim 5, wherein the clustering a plurality of second parameters in the plurality of region parameters into a plurality of first datasets comprises:

acquiring a target parameter in the plurality of second parameters, wherein the target parameter is one of the plurality of second parameters that is unprocessed; and

in a case that the target parameter is a core parameter, building a parameter set that comprises the target parameter and a second parameter associated with the target parameter in the plurality of second parameters, wherein a number of second parameters a distance from each of which to the core parameter is within a first threshold is not less than a second threshold.

**7.** The method according to claim 4, wherein the determining an image feature for characterizing the target object by using the color data of the training image comprises:

setting a parameter in a convolutional layer of the original model to have a same value as a parameter in a convolutional layer of a pre-trained feature extraction model; and extracting the image feature for characterizing the target object from the color data of the training image through the convolutional layer of the original model.

**8.** The method according to claim 2, wherein the training parameters in an original model by using the training image to acquire a recognition model configured to recognize the target object comprises: training the parameters in the original model by using training images of a plurality of resolutions to acquire a plurality of recognition models corresponding to the plurality of resolutions, wherein each of the recognition models is acquired through training by using a training image of one resolution, and training images for acquiring any two of the recognition models have different resolutions.

**9.** The method according to any one of claims 1 to 8, wherein the searching for a target region among candidate regions in the first image each of which takes a point in one of the first regions as a center comprises:

acquiring a plurality of fourth regions found by the target model among all the candidate regions, wherein each of the fourth regions is a region recognized by the target model in the first image in which the target object is located; and in a case that there are fourth regions a distance between centers of which is not greater than a third threshold among the plurality of fourth regions, using a fourth region with a highest confidence level among the fourth regions a distance between centers of which is not greater than a third threshold as a target region, and using a fourth region a distance from a center of which to a center of any other one of the fourth regions is greater than the third threshold as a target region.

**10.** The method according to any one of claims 1 to 8, wherein the segmenting the first image into a plurality of first regions by using a target model comprises: selecting the target model corresponding to a resolution of the first image from a plurality of recognition models, and segmenting the first image into the plurality of first regions by using the target model.

**11.** An image recognition apparatus, comprising:

a first acquisition unit, configured to acquire a first image; a search unit, configured to segment the first image into a plurality of first regions by using a target model, and search for a target region among candidate regions in the first image each of which takes a point in one of the first regions as a center, wherein the target region is a candidate region in the first image in which a target object is located, the target model is a pre-trained neural network model and is configured to recognize from an image a region in which the target object is located, and the target model is obtained through training by using positive samples and negative samples, wherein each of the positive samples comprises an identified region in which the target object is located, and each of the negative samples comprises an identified region in which a noise is located; and an identification unit, configured to identify the target region in the first image.

**12.** The apparatus according to claim 11, further comprising:

a second acquisition unit, configured to acquire, before the first image is segmented into the plurality of first regions by using the target model and the target region is searched among the candidate regions in the first image each of which takes a point in one of the first region as a center, a training image that comprises the positive samples and negative samples, wherein each of the positive samples comprises an identified region in which the target object is located, and each of the negative samples comprises an identified region in which a noise is located; a training unit, configured to train parameters in an original model by using the training image to acquire a recognition model configured to recognize the target object, the recognition model comprising the target model.

**13.** The apparatus according to claim 12, wherein the training unit comprises:

a training module, configured to input color data of the training image into the original model, and train the parameters in the original model by using the color data of the training image; a first validation model, configured to use the trained original model as the recognition model in a case that color data of a verification image is used as an input of the trained original model and a second region recognized by the trained original model in the verification image matches an identification region in the verification image, wherein the second region is a region recognized by the trained original model in the verification image in which the target object is located, and the identified region is a region identified in the training image in which the target object is actually located; and

a second validation model, configured to instruct the training module to continually train the parameters in the original model by using color data of the positive samples and color data of the negative samples in a case that the color data of the verification image is used as the input of the trained original model and the second region recognized by the trained original model in the verification image does not match the identification region in the verification image, until the second region recognized by the trained original model in the verification image matches the identification region if the color data of the verification image is used as the input of the trained original model.

14. An electronic device, comprising:

a memory;
a processor; and
a computer program that is stored in the memory and executable on the processor, wherein the processor is configured to perform the method according to any one of claims 1 to 10 by using the computer program.

15. An image recognition system, comprising an image acquisition device and an image recognition device, wherein
the image recognition device is configured to perform the method according to any one of claims 1 to 10.

16. A storage medium, comprising a computer program stored therein, wherein the computer program, when run, performs the method according to any one of claims 1 to 10.

User terminal 103

S206. Identify the
target region in the
first image

S202. Acquire a first image

Database 105

Store or read

S204. Segment the first image into
multiple first regions, and search
for a target region among candidate
regions in the first image frame
each using a point in the first region
as a center

Server 101

FIG. 1

| Acquire a first image | S202 |

Segment the first image into multiple first regions by a target model, and search for a target region among candidate regions in the first image each taking a point in the first region as a center, where the target region is a candidate region in the first image in which a target object is located, the target model is a pre-trained neural network model configured to recognize from an image a region in which the target object is located, and the target model is obtained through training by using positive samples with a region in which the target object is located being identified and negative samples with a region in which a noise is located being identified

S204

| Identify the target region in the first image | S206 |

FIG. 2

FIG. 3

FIG. 4

FIG. 5

FIG. 6

```
    Layer   Network  Size            Input                     Output
    0 conv      32   3 x 3 / 1    576 x 576 x    3    ->    576 x 576 x    32
    1 max            2 x 2 / 2    576 x 576 x   32    ->    288 x 288 x    32
    2 conv      64   3 x 3 / 1    288 x 288 x   32    ->    288 x 288 x    64
    3 max            2 x 2 / 2    288 x 288 x   64    ->    144 x 144 x    64
    4 conv     128   3 x 3 / 1    144 x 144 x   64    ->    144 x 144 x   128
    5 conv      64   1 x 1 / 1    144 x 144 x  128    ->    144 x 144 x    64
    6 conv     128   3 x 3 / 1    144 x 144 x   64    ->    144 x 144 x   128
    7 max            2 x 2 / 2    144 x 144 x  128    ->     72 x  72 x   128
    8 conv     256   3 x 3 / 1     72 x  72 x  128    ->     72 x  72 x   256
    9 conv     128   1 x 1 / 1     72 x  72 x  256    ->     72 x  72 x   128
   10 conv     256   3 x 3 / 1     72 x  72 x  128    ->     72 x  72 x   256
   11 max            2 x 2 / 2     72 x  72 x  256    ->     36 x  36 x   256
   12 conv     512   3 x 3 / 1     36 x  36 x  256    ->     36 x  36 x   512
   13 conv     256   1 x 1 / 1     36 x  36 x  512    ->     36 x  36 x   256
   14 conv     512   3 x 3 / 1     36 x  36 x  256    ->     36 x  36 x   512
   15 conv     256   1 x 1 / 1     36 x  36 x  512    ->     36 x  36 x   256
   16 conv     512   3 x 3 / 1     36 x  36 x  256    ->     36 x  36 x   512
   17 max            2 x 2 / 2     36 x  36 x  512    ->     18 x  18 x   512
   18 conv    1024   3 x 3 / 1     18 x  18 x  512    ->     18 x  18 x1024
   19 conv     512   1 x 1 / 1     18 x  18 x1024    ->     18 x  18 x   512
   20 conv    1024   3 x 3 / 1     18 x  18 x  512    ->     18 x  18 x1024
   21 conv     512   1 x 1 / 1     18 x  18 x1024    ->     18 x  18 x   512
   22 conv    1024   3 x 3 / 1     18 x  18 x  512    ->     18 x  18 x1024
   23 conv    1024   3 x 3 / 1     18 x  18 x1024    ->     18 x  18 x1024
   24 conv    1024   3 x 3 / 1     18 x  18 x1024    ->     18 x  18 x1024
   25 route     16
   26 conv      64   1 x 1 / 1     36 x  36 x  512    ->     36 x  36 x    64
   27 reorg              / 2      36 x  36 x   64    ->     18 x  18 x   256
   28 route   27 24
   29 conv    1024   3 x 3 / 1     18 x  18 x1280    ->     18 x  18 x1024
   30 conv      40   1 x 1 / 1     18 x  18 x1024    ->     18 x  18 x    40
   31 detection
```

FIG. 7

Candidate box 1

Candidate box 2

Candidate box 3

FIG. 8

External picture

Multi-scale model selection module

Low-resolution YOLO model (416*416)

Moderate-resolution YOLO model (576*576)

High-resolution YOLO model (800*800)

Final result

FIG. 9

First acquisition unit
1001

Search unit 1003

Identification unit
1005

FIG. 10

Input/output device 1107

Processor
1101

**1105**

Memory
1103

FIG. 11

## INTERNATIONAL SEARCH REPORT

| | International application No. |
|---|---|
| | **PCT/CN2019/115117** |

**A. CLASSIFICATION OF SUBJECT MATTER**

G06K 9/62(2006.01)i

According to International Patent Classification (IPC) or to both national classification and IPC

**B. FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

WPI; EPODOC; CNPAT; CNKI; IEEE: 图像, 识别, 模型, 目标, 神经网络, 训练, 区域, 样本, 噪声, 分辨率, region, resolution, image, target, noise, model, neural, network, section, sample, training

**C. DOCUMENTS CONSIDERED TO BE RELEVANT**

| Category* | Citation of document, with indication, where appropriate, of the relevant passages | Relevant to claim No. |
|---|---|---|
| PX | CN 109670532 A (TENCENT TECHNOLOGY SHENZHEN CO., LTD.) 23 April 2019 (2019-04-23) <br> claims, and description, paragraph [0147] | 1-16 |
| X | CN 107886110 A (SHENZHEN INTELLIFUSION TECHNOLOGIES CO., LTD.) 06 April 2018 (2018-04-06) <br> description, paragraphs [0055]-[0205] | 1-2, 8, 10-12, 14-16 |
| A | CN 102609680 A (INSTITUTE OF AUTOMATION, CHINESE ACADEMY OF SCIENCES) 25 July 2012 (2012-07-25) <br> entire document | 1-16 |
| A | US 2017330054 A1 (BAIDU ONLINE NETWORK TECHNOLOGY BEIJING CO., LTD.) 16 November 2017 (2017-11-16) <br> entire document | 1-16 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **25 December 2019** | **23 January 2020** |

| Name and mailing address of the ISA/CN | Authorized officer |
|---|---|
| China National Intellectual Property Administration <br> No. 6, Xitucheng Road, Jimenqiao Haidian District, Beijing 100088 <br> China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/115117**

| Patent document cited in search report | | | Publication date (day/month/year) | Patent family member(s) | | | Publication date (day/month/year) |
|---|---|---|---|---|---|---|---|
| CN | 109670532 | A | 23 April 2019 | None | | | |
| CN | 107886110 | A | 06 April 2018 | None | | | |
| CN | 102609680 | A | 25 July 2012 | WO | 2013091370 | A1 | 27 June 2013 |
| US | 2017330054 | A1 | 16 November 2017 | CN | 106021364 | A | 12 October 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2018114102210